# EUROPÄISCHE PATENTANMELDUNG

(11) **EP 1 231 163 A1**
(43) Veröffentlichungstag der Anmeldung: **14.08.2002**
(21) Anmeldenummer: 01102814.9
(22) Anmeldetag: 12.02.2001
(51) Int. Cl.: B65G 1/04, B66F 9/20

(54) **Stückgut-Lagereinrichtung**

(71) Anmelder: Beumer Maschinenfabrik GmbH & Co. KG, 59269 Beckum (DE)
(72) Erfinder: Brunsen, Hermann, Dr.-Ing., 59269 Beckum (DE); Krumkamp, Hermann, Dipl.-Ing., 59329 Wadersloh (DE)
(74) Vertreter: Hoormann, Walter, Dr.-Ing.

(57) **Zusammenfassung**

Lagereinrichtung (1) zum definierten Ein- und Auslagern von Stückguteinheiten (2) mit einer mit Zu- und Abfördereinrichtung (4), mittels welcher Stückguteinheiten (2) nacheinander an einem freien Lagerplatz (5) abzusetzen sind, und mehreren winklig zur Fördereinrichtung (4) in wenigstens einer Lagerebene (18, 18') angeordneten, lagerplatzbildenden Stützeinrichtungen (8), die jeweils wenigstens zwei parallele Stützschienen (9, 10, 11) aufweisen, wobei auf der Förderbahn (4') der Fördereinrichtung (4) ein elektromotorisch antreibbares Lagerfahrzeug (13) verfahrbar ist, welches eine höhenverstellbare, verschwenkbare Aufnahmeeinrichtung (15) für eine Stückgutcharge (2) aufweist; wobei das Lagerfahrzeug (13) aus einem antreibbaren Unterwagen (20) sowie einem relativ zum Unterwagen (20) jeweils auf die Stützschienen (9 - 11) einer Stützeinrichtung (8) verfahrbaren, antreibbaren Oberwagen (21) besteht; wobei eine Einrichtung (22) zur berührungslosen Übertragung und Versorgung des Lagerfahrzeuges (13) mit der erforderlichen Antriebs- und Steuerungsenergie vorgesehen ist, die einen mit hochfrequenter elektrischer Energie gespeisten, entlang der Förderbahn (4') sowie der Stützeinrichtungen (8) verlaufenden Leiter (23) sowie einen berührungslos mit diesem zusammenwirkenden, am Lagerfahrzeug (13) angeordneten, die von dem Leiter (23) abgestrahlte elektrische Energie induktiv aufnehmenden Aufnehmer (24) aufweist, welcher die aufgenommene elektrische Energie an einen ebenfalls im Oberwagen (21) angeordneten Umformer weiterleitet, der sie in die zum Betrieb des Lagerfahrzeuges (13) erforderliche Energieform umwandelt und diese an die Verbraucher weiterleitet; und wobei ein externer Zentralrechner vorgesehen ist, dem die beim Einlagern ermittelten Lager- und Stückgutdaten zwecks dortiger Ablage zuzuleiten sind.

## Beschreibung

Die vorliegende Erfindung betrifft eine Lagereinrichtung zum definierten Einlagern und Wiederauslagern von Stückguteinheiten, insb. von sog. Ladeeinheiten mit oder ohne Palette, mit einer mit Stückguteinheiten zu beschickenden Zu- und Abfördereinrichtungen, mittels welcher einzulagernde Stückguteinheiten i.a. einzeln (ggf. aber auch in Gruppen) nacheinander jeweils einem freien Lagerplatz zuzufördern sind, an dem jeweiligen Lagerplatz abzusetzen (also von der Fördereinrichtung abzugeben) sind, und die gelagerten Stückguteinheiten zu gegebener Zeit wieder von dem jeweiligen Lagerplatz aufzunehmen und - zwecks Weiterverarbeitung bzw. Abtransport - abzufördern sind, und mit mehreren (i.a. einer Vielzahl) i.a. rechtwinklig zur Förderbahn der (Zu- und Ab-)Fördereinrichtung in deren i.w. horizontaler Förderebene sowie ggf. wenigstens einer zu dieser parallelen weiteren Lagerebene angeordneten Stützeinrichtungen zum (vorzugsweise eng benachbarten) Einlagern von Stückguteinheiten, wobei die Stützeinrichtungen jeweils wenigstens zwei mit gegenseitigem Abstand in der betreffenden Lagerebene angeordnete, parallele Stützschienen aufweisen, und wobei die (Zu- und Ab-)Fördereinrichtung eine i.a. gerade, ggf. aber auch in der betreffenden Lagerebene gekrümmte oder abgewinkelte Förderbahn und ein auf dieser verfahrbares, mittels eines Elektromotors antreibbares Lagerfahrzeug aufweist, welches eine höhenverstellbare und zumindest begrenzt um eine vertikale Schwenkachse verschwenkbare Aufnahmeeinrichtung zum jeweiligen Aufnehmen, Abstützen und Absetzen einer Stückgutcharge aufweist, und welches seinerseits mittels wenigstens z.T. antreibbarer Laufrollen auf jede(r) Stützeinrichtung der Lagereinrichtung verfahrbar ist.

Wenn vor- oder nachstehend von einem "definierten" Ein- und Auslagern einer Stückguteinheit die Rede ist, so ist damit gemeint, daß die betreffende/jede Stückguteinheit bei ihrer Einlagerung nicht als anonyme, "namenlose" Einheit in der Lagereinrichtung verschwindet, und zu letzterer - durch Zählung der in die Lagerrichtung eingefahrenen sowie der aus ihr entnommenen Stückguteinheiten - lediglich die Information zur Verfügung steht, wie viele Stückguteinheiten jeweils in ihr enthalten sind, sondern daß zu jeder in die Lagereinrichtung verbrachten Stückguteinheit auch die Information zur Verfügung steht, ob - und ggf. wo - sie sich noch in der Lagereinrichtung befindet, wobei durch eine entsprechende Codierung jeder Stückguteinheit vor ihrem/beim Eingeben in die Lagereinrichtung jeder Stückguteinheit ersichtlich nicht nur Informationen über die Ladeeinheit selbst, sondern auch z.B. der Tag ihrer Herstellung, Einlagerung etc. zuzuordnen sind, so daß mithin eine ständige Lagerinventur zur Verfügung steht.

Wenn vor- oder nachstehend von sog. Ladeeinheiten die Rede ist, so sind hiermit (i.a. formbeständig verpackte) Stückgutstapel gemeint, die bspw. aus mehreren übereinander gestapelten Lagen von mit Schüttgut (wie z.B. Zement, Kunststoffgranulat, Düngemitteln etc.) gefüllten Säcken bestehen, und - i.a. auf einer Palette - mittels einer Palettiervorrichtung gebildet werden, jedoch auch palettenlos ausgebildet sein können.

Wenn vorstehend angegeben worden ist, daß die i.w. aus Stützschienen od.dgl. bestehenden, lagerplatzbildenden Stützeinrichtungen i.a. (und regelmäßig sogar vorzugsweise) rechtwinklig zur Förderbahn der Zu- und Abfördereinrichtung verlaufen, so schließt dieses einen hiervon abweichenden Anschlußwinkel zur Förderbahn der Zu- und Abfördereinrichtung nicht etwa aus. Es hat sich lediglich gezeigt, daß eine rechtwinklige relative Zuordnung zwischen der Zu- und Abfördereinrichtung einerseits und den lagerplatzbildenden Stützeinrichtungen andererseits für das Überführen einzulagernder Stückguteinheiten von der Fördereinrichtung auf eine Stützeinrichtung bzw. beim Auslagern von einer Stützeinrichtung auf die Fördereinrichtung besonders zweckmäßig und problemlos ist, zumal die Förderbahn der Fördereinrichtung nicht zwangsläufig linear verläuft, sondern aufgrund der jeweiligen Vorgaben ggf. wenigstens abschnittsweise gekrümmt oder abgewinkelt zum vorhergehenden Förderbahnabschnitt verlaufen kann, wodurch ein nicht-rechtwinkliger Verlauf der Stützeinrichtungen in einem solchen Förderbahnbereich die Übergabe noch verkomplizieren würde.

Derartige Lagereinrichtungen, die bei einer Ausbildung mit wenigstens zwei übereinander angeordneten Lagerebenen auch als Regallager bezeichnet werden, bzw. als Palettenlager, werden in den verschiedensten Industriezweigen dazu verwendet, um auf einer bestimmten Lager-Grundfläche möglichst viele Stückguteinheiten einlagern und nach Bedarf gezielt wieder auslagern zu können. Dabei kann es sich bei den Stückguteinheiten um unterschiedlichstes Stückgut handeln, und zwar um individuell anonymes Stückgut einer bestimmten Gattung (z.B. gefüllte Zementsäcke), bei dem eine gezielte individuelle Entnahme regelmäßig irrelevant ist (und allenfalls ein "Verfallsdatum" eine Rolle spielt, nachdem die garantierte Qualität nicht mehr gewährleistet ist), aber auch bspw. um kommisionierte Waren, die ggf. nur kurz zwischenzulagern sind, und dem Lager sodann als individualisierte Stückguteinheiten gezielt wieder zu entnehmen sind.

Ein Regallager ist bspw. aus der DE 297 17 499 U1 bekannt, bei dem eine Kommissionierung mit Ladeeinheiten auf Paletten, Platten, in Behältern oder ohne Transporthilfen sowohl mit einem als Satellitenwagen bezeichneten Lagerwagen als auch mit einem Gabelhubwagen oder von Hand jeweils von einem Regalgang aus durchgeführt wird, der jeweils zwischen von Stützeinrichtungen gebildeten Regalplätzen (Lagerplätzen) verläuft, und daher von einem auf Schienen verfahrbaren Lagerfahrzeug oder einem auf dem Untergrund verfahrbaren Gabelhubwagen befahrbar und demgem. auch von Bedienungspersonal begehbar ist.

Für die Ausbildung des Lagerfahrzeuges für gattungsgemäße Lagereinrichtungen sind unterschiedliche Vorschläge gemacht worden. So ist aus der DE 296 20 342 U1 ein Lagerfahrzeug mit einem dreigabelpaarigem, motorisch angetriebenen Hubwagen mit anheb- und absenkbaren Gabelzinken bekannt, bei dem von den sechs Gabelzinken für eine wahlweise Aufnahme von zwei quer- oder drei längsstehenden Paletten vier Gabelzinken in Zinken-Längsrichtung feststehend und zwei Gabelzinken aus dem Paletten-Aufnahmebereich herausbewegbar am Hubwagen angeordnet sind.

Bei einem aus der DE 198 14 941 A1 bekannten, ähnlichen Lagerfahrzeug sind alle Gabelzinken der Aufnahmeeinrichtung mit quer zur Zinken-Längsrichtung "schwimmenden" Palettenaufnahmen ausgestattet, sowie - ebenso wie der Hubwagen - mit Ultraschallsensoren zur Fahrrichtungsmessung und -korrektur, wobei der Hubwagen weiterhin mit einem Sensor zur Winkelmessung sowie einer Kabeltrommel (mit Energie- und Signalkabel) zur Antriebsversorgung und zum Signalaustausch sowie zur Wegmessung ausgerüstet ist.

Allen bisher bekannt gewordenen Lagereinrichtungen der hier in Rede stehenden Gattung gemeinsam ist der Umstand, daß die für den Betrieb des Lagerfahrzeuges erforderliche Antriebs- und Steuerenergie über Schleppkabel, Schleifringe od.dgl. auf das Lagerfahrzeug übertragen werden muß. Das erfordert nicht nur einen entsprechend hohen Aufwand, sondern führt auch zu weiteren für die jeweilige Ausbildung hinlänglich bekannten Nachteilen und Gefahrenquellen (z.B. Stolper- und Beschädigungsgefahr bei Schleppkabel-Ausbildung; hohe Sicherheitsanforderungen bzgl. der stromführenden Schienen bei Schleifringausbildung u.dgl.). Dabei kommt bzgl. der relativ hohen Investitions- und Betriebskosten bei konventionellen gattungsgemäßen bzw. gattungsähnlichen Lagereinrichtungen hinzu, daß bspw. bei einem Einsatz von Kettenförderern od.dgl. insb. dann ein hoher Aufwand zu betreiben ist, wenn die Stückguteinheiten definiert ein- und ausgelagert werden sollen/müssen, weil der jeweilige Lagerplatz bei einer solchen Ausbildung zwangsläufig mit einer entsprechenden Intelligenz versehen werden muß.

Der vorliegenden Erfindung liegt die Aufgabe zugrunde, die Lagereinrichtungen der eingangs beschriebenen Gattung unter Vermeidung bzw. erheblicher Verminderung ihrer Nachteile insb. dahingehend zu verbessern, daß die Stückguteinheiten - unter entsprechender erheblicher Verminderung des Investitions- und Wartungsaufwandes - auf "intelligenzfreien" Lagerplätzen dennoch definiert eingelagert werden können, wobei die Ein- und Auslagerung zum rasch und betriebssicher möglich sein, die Unfall- und Beschädigungsgefahr deutlich verringert, und ggf. eine Erweiterung problemlos möglich sein soll.

Die Lösung dieser Aufgabe erfolgt durch die kennzeichnenden Merkmale des Anspruches 1. Bevorzugte Ausgestaltungen der vorliegenden Erfindung sind in den Unteransprüchen beschrieben.

Die Erfindung wird nachfolgend an Ausführungsbeispielen unter Bezugnahme auf eine Zeichnung weiter erläutert, wobei diese Erläuterungen ganz überwiegend nicht beispielspezifisch sind, sondern sich ganz allgemein auf die Erfindung beziehen. In der Zeichnung zeigt
- **Fig. 1:**: eine stark verkleinerte Draufsicht auf eine erfindungsgemäße Lagereinrichtung;
- **Fig. 2:**: einen Teilschnitt durch die Lagereinrichtung gem. Fig. 1 in Richtung der Schnittlinie II-II gesehen;
- **Fig. 3:**: einen Teilschnitt durch die Zu- und Abfördereinrichtung (genauer gesagt deren Förderbahn) der Lagereinrichtung gem. den Fig. 1 und 2 in Richtung der Schnittlinie III-III gesehen;
- **Fig. 4:**: eine Schnittansicht gem. der Schnittlinie IV-IV in Fig. 2;
- **Fig. 5:**: eine (gegenüber der Darstellung gem. den Fig. 1 - 4 vergrößerte) Draufsicht auf eine Variante in Richtung des Pfeiles V in Fig. 6 gesehen;
- **Fig. 6:**: eine teilweise Seitenansicht der Lagereinrichtung gem. Fig. 5 in Richtung der Schnittlinie VI-VI gesehen;
- **Fig. 7:**: eine (gegenüber den Fig. 5 und 6 vergrößerte) Seitenansicht des auf der Förderbahn der Zu- und Abfördereinrichtung befindlichen Lagerfahrzeuges in Richtung des Pfeiles VII in Fig. 8 gesehen;
- **Fig. 8:**: eine Seitenansicht des Lagerfahrzeuges gem. Fig. 7 in Richtung des Pfeiles VIII in Fig. 9 gesehen;
- **Fig. 9:**: eine Draufsicht auf das Lagerfahrzeug gem. den Fig. 7 und 8 in Richtung des Pfeiles IX in Fig. 8 gesehen;
- **Fig. 10:**: eine (gegenüber den Fig. 7 - 9 noch weiter vergrößerte) Seitenansicht des auf den Stützschienen einer Stützeinrichtung befindlichen Oberwagens des Lagerfahrzeuges; und
- **Fig. 11:**: eine Feinarritirung des Lagerfahrzeuges an einer Mündungs- bzw. Übergabestelle einer (nicht dargestellten) Stützeinrichtung.

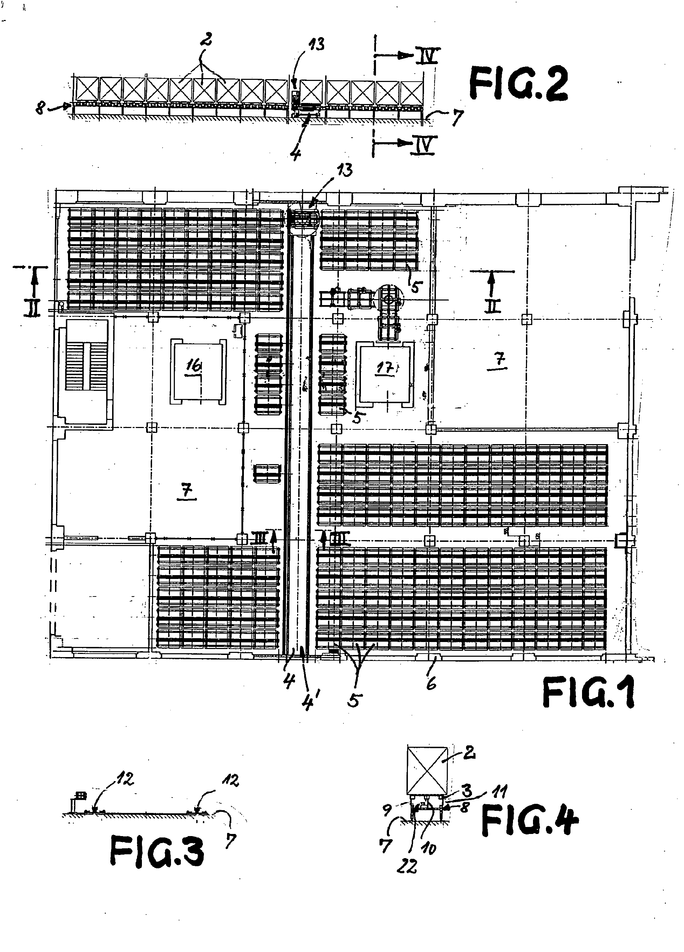

Die Fig. 1 - 4 zeigen eine eine im ganzen mit 1 bezeichnete Lageeinrichtung zum definierten Ein- und Wiederauslagern von Stückguteinheiten 2, bei denen es sich um Ladeeinheiten handelt, nämlich jeweils auf einer Palette 3 angeordnete Stückgutstapel.

Die Lageeinrichtung 1 weist eine Fördereinrichtung 4 auf, mittels welcher die einzulagernden Stückguteinheiten 2 zunächst einmal einzeln nacheinander jeweils einem freien Lagerplatz 5 zuzufördern sind. Hiervon weist die Lageeinrichtung etwa 200 Stück auf, die in der aus Fig. 1 ersichtlichen Weise in dem Lager eines Gebäudes 6 - in Anpassung an dessen Gegebenheiten - angeordnet sind.

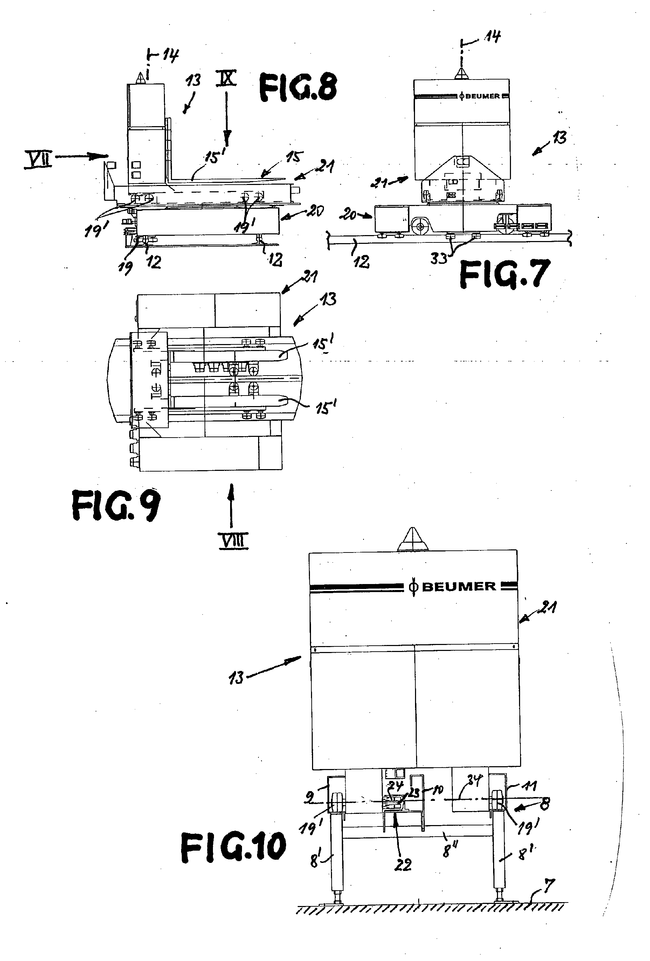

Die Lagerplätze 5 werden von einer Vielzahl rechtwinklig zur Förderbahn 4' der Zu- und Abfördereinrichtung 4 in deren Förderebene 7 angeordneten Stützeinrichtungen 8 gebildet, die jeweils drei mit gegenseitigem Abstand (oberhalb der Förderebene 7) angeordnete parallele Stützschienen 9, 10 und 11 aufweisen, wie dieses deutlicher aus Fig. 10 erkennbar ist, und weiter unten noch detaillierter erläutert wird.

Auf der von zwei Schienen 12 gebildeten Förderbahn 4 (s. insb. Fig. 3) ist ein auf der Förderbahn 4' verfahrbares, mittels eines Elektromotors antreibbares Lagerfahrzeug 13 angeordnet, welches aus den Fig. 7 - 9 deutlicher erkennbar ist. Es weist u.a. eine höhenverstellbare, um eine vertikale Schwenkachse 14 verschwenkbare Aufnahmeeinrichtung 15 zum jeweiligen Aufnehmen, Abstützen und Absetzen einer Stückgutcharge 2 auf, wobei die Aufnahmeeinrichtung 15 aus zwei mit gegenseitigem Abstand angeordneten Gabeln 15' besteht, und um die vertikale Schwenkachse 14 um 180° schwenkbar ist, um die beiderseits der Förderbahn 4' der Fördereinrichtung 4 angeordneten Lagerplätze 5 wahlweise bedienen zu können.

Links neben der Fördereinrichtung 4 befindet sich ein Lastenaufzug 16, und spiegelsymmetrisch zur Längsmittellinie der Förderbahn 4' ist auf der anderen Seite der Fördereinrichtung ein Palettierer 17 angeordnet.

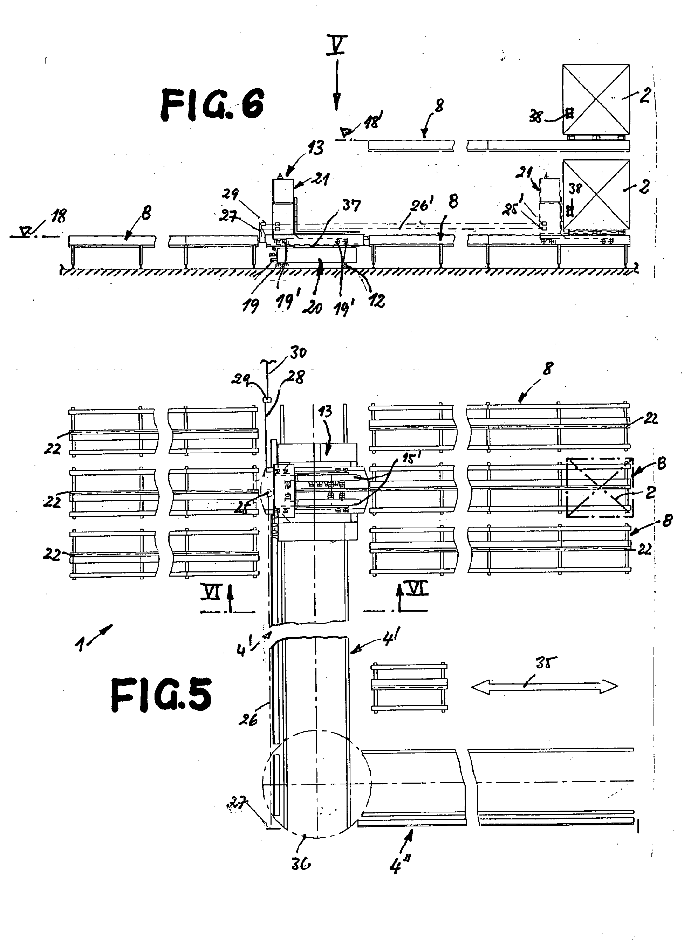

Bei der weiteren Beschreibung der erfindungsgemäßen Lagereinrichtung und deren Arbeitsweise wird insb. auf die Variante gem. den Fig. 5 - 10 Bezug genommen, die sich von dem Ausführungsbeispiel gem. den Fig. 1 - 4 - abgesehen von einer anderen Anordnung der Lagerplätze 5, die in Fig. 5 nur unvollständig/beispielhaft dargestellt sind - i.w. dadurch unterscheidet, daß die Lagereinrichtung 1 zusätzlich zu der Lagerebene 18 eine weitere, darüber befindliche, parallele Lagerebene 18' aufweist, in welcher weitere Stützeinrichtungen 8 angeordnet sind, wie in Fig. 6 ausschnittweise (und etwas schematisiert) angedeutet ist. Aus Fig. 6 sowie den Fig. 7 - 9 ist erkennbar, daß das Lagerfahrzeug 13 aus einem Unterwagen 20 und einem Oberwagen 21 besteht, wobei das gesamte Lagerfahrzeug 13 mittels eines antreibbaren ersten Rollensatzes 19 auf der Förderbahn 4' der Fördereinrichtung 4 verfahrbar ist, und sein u.a. mit der Aufnahmeeinrichtung 15 versehener Oberwagen 21 mittels eines ebenfalls antreibbaren zweiten Rollensatzes 19' relativ zu dem Unterwagen 20 auf die Stützschienen 9 - 11 jeder Stützeinrichtung 8 verfahrbar ist (s. Fig. 6, in welcher das Lagerfahrzeug 13 mit ausgezogenen Linien auf den Schienen 12, 12 der Förderbahn 4' der Zu - und Abfördereinrichtung 4 dargestellt ist, und mit gestrichelten Linien auf einer Stützeinrichtung 8 der unteren Lagerebene 18).

Sowohl entlang der Förderbahn 4' als auch entlang der Stützeinrichtungen 8 ist jeweils eine Einrichtung 22 zur berührungslosen Übertragung und Versorgung des Lagerfahrzeuges 13 mit der gesamten für dessen Betrieb erforderlichen elektrischen Antriebs- und Steuerungsenergie vorgesehen. Zwar ist man bisher davon ausgegangen, daß eine berührungslose Energieübertragung, die nicht nur Steuerungs- und Meßeinrichtungen versorgt, sondern auch die elektrischen Antriebe von Arbeits- bzw. Fördereinrichtungen bei Einrichtungen mit höherem Leistungsbedarf, technisch gar nicht möglich sei, da hierfür bspw. bei den in der Zeichnung dargestellten Ausführungsbeispielen eine elektrische Leistung von mehr als 6 kW benötigt wird, doch hat sich gezeigt, daß diese Vermutung zumindest dann auf einem unbegründeten Vorurteil beruht, wenn die entsprechende Einrichtung 22 in zweckmäßiger Weise ausgebildet wird.

Die Einrichtung 22 weist einerseits einen mit hochfrequenter elektrischer Energie gespeisten, entlang der Förderbahn 4' sowie der Stützeinrichtungen 8 verlaufenden, in der Art einer Flachschiene ausgebildeten, stationären Leiter 23 und andererseits einen berührungslos mit diesem elektrisch zusammenwirkenden, am Lagerfahrzeug 13 angeordneten, die hochfrequent von dem Leiter 23 abgestrahlte elektrische Energie induktiv aufnehmenden Aufnehmer 24 auf, welcher die aufgenommene elektrische Energie an einen ebenfalls am Lagerfahrzeug 13 (nämlich in dessen Oberwagen 21) angeordneten, in der Zeichnung nicht dargestellten Umformer weiterleitet, in/von dem sie in eine/die zum Betrieb der nicht im einzelnen dargestellten Antriebe des Lagerfahrzeuges 13 sowie der Meß- und Steuerungseinrichtungen erforderliche Energieform umgewandelt und in dieser Form an die jeweiligen Einrichtungen (Verbraucher) weitergeleitet wird.

Dabei weist der Unterwagen 20 des Lagerfahrzeuges 13 einen elektrischen Antrieb auf, mittels dessen der erste Laufrollensatz 19 des Lagerfahrzeuges 13 antreibbar ist, und der Oberwagen 21 des Lagerfahrzeuges 13 einen gesonderten eigenen Antrieb, mittels dessen der zweite Laufrollensatz 19' antreibbar ist. Da sich der Umformer im Oberwagen 21 befindet, ist stets eine problemlose, berührungsfreie Energieversorgung gewährleistet. Denn wenn der Oberwagen 21 relativ zu dem Unterwagen 20 auf eine Stützeinrichtung 8 verfahren worden ist, braucht der für den Antrieb des gesamten Lagerfahrzeuges 13 vorgesehene Elektroantrieb nicht gespeist zu werden, da der Unterwagen 20 allein (ohne Oberwagen 21) nicht verfahren wird. Befindet sich der Oberwagen 21 aber auf dem Unterwagen 20, so ist bspw. durch geeignete Schleifringkontakte od.dgl. auch eine elektrische Versorgung des Antriebes zum Verfahren des gesamten Lagerfahrzeuges 13 zu gewährleisten.

Bei einer Modifikation kann das Lagerfahrzeug 13 ggf. auch nur einen einzigen Elektroantrieb aufweisen, der dann im Oberwagen 21 angeordnet sein muß, um diesen auf einer Stützeinrichtung 8 verfahren zu können. Bei einer solchen Ausgestaltung kann zwischen dem Oberwagen 21 und dem Unterwagen 20 bzw. dem im Oberwagen 21 angeordneten einzigen Elektroantrieb und dem ersten Laufrollensatz 19 des Unterwagens 20 eine Kupplung vorhanden sein, die (vorzugsweise erst) dann einkuppelt, wenn der Oberwagen 21 nach Verlassen einer Stützeinrichtung 8 seine ordnungsgemäße Verfahrstellung auf dem Unterwagen 20 wieder eingenommen hat, was zugleich verhindert, daß sich das Lagerfahrzeug 13 bereits zuvor auf der Förderbahn 4' in Bewegung setzt, und aufgrund des seitlich vorstehenden Oberwagens 21 mit einem in die Förderbahn ragenden Gegenstand kollidiert.

Es sei noch nachgetragen, daß der als Flachschiene ausgebildete, stationäre elektrische Leiter 23 bevorzugt von einer schlitzförmigen Ausnehmung eines am Oberwagen 21 des Lagerfahrzeuges 13 angeordneten, i.w. U-förmigen, ferritischen Gabelabschnittes umgeben ist/umgriffen wird, wodurch bei geeigneter Ausbildung und Materialwahl nicht nur die zu Steuer- und Meßzwecken benötigte elektrische Leistung, sondern auch die für Antriebszwecke benötigte Leistung berührungslos zu übertragen ist.

Für Steuerungs- und Meßzwecke wird u.a. deshalb elektrische Energie benötigt, weil das Lagerfahrzeug 13 zum Ein- wie auch zum Auslagern einer Stückguteinheit 2 jeweils so genau wie möglich an/vor dem Kopfende einer Stützeinrichtung 8 positioniert werden muß, wie dieses beispielhaft in Fig. 5 (dort indes der besseren Deutlichkeit halber ohne Stückguteinheit) gezeigt ist.

Zu diesem Zweck ist das Lagerfahrzeug 13 mit einem Laserstrahl- oder Lichtschrankengeber 25 versehen, der parallel zur Förderbahn 4' einen Lichtstrahl 26 emittiert, welcher an einen am Ende der Förderbahn 4' stationär angeordneten Reflektor 27 reflektiert wird. Derartige Reflektoren 27 sind auch jeweils an einem Ende jeder Stützeinrichtung 8 angeordnet, welche einen Lichtstrahl 26' reflektieren (s. Fig. 6), der von demselben Lichtschrankengeber 25 oder einem weiteren am Oberwagen 21 des Lagerfahrzeuges 13 angeordneten Lichtschrankengeber 25' ausgesandt wird, so daß auch dort die Entfernung zu einem ortsfesten Fixpunkt jeweils recht genau zu bestimmen ist, und damit ein ganz bestimmter Lagerplatz 5.

Die entsprechenden Daten werden über eine ebenfalls als Lichtschranke oder Laserstrahl ausgebildete Daten-Übertragungsleitung 28 vom Lagerfahrzeug 13 an eine ortsfeste Meß- und Daten-Schnittstelle 29 übertragen, von der aus sie über eine Leitung 30 an den externen Zentralrechner übertragen und dort abgelegt werden, so daß sie dort jederzeit abgefragt werden können, und mithin eine (EDV-)definierte Einlagerung möglich ist, obwohl die Stützeinrichtungen 8 bzw. die von ihnen gebotenen Lagerplätze 5 nicht mit einer Intelligenz versehen sind, welche die Positionierung jeder eingelagerten Stützguteinheit 2 definiert. Bereits hieraus ist der ganz erhebliche wirtschaftliche Vorteil der erfindungsgemäßen Lagereinrichtung gegenüber vergleichbaren konventionellen Lagereinrichtungen ohne weiteres zu erkennen.

Da zu einem störungsfreien Betrieb aber u.a. auch ein problemfreies Verfahren des Oberwagens 21 des Lagerfahrzeuges 13 vom Unterwagen 20 auf die Stützeinrichtungen 8 hört, die im Stand der Technik von der Fachwelt immer wieder zu Recht bemängelt worden ist, und die Fahrweg-Entfernungsmessung mittels der Komponenten 25 - 27 zwar recht genau erfolgen kann, jedoch häufig nicht so genau, daß das Lagerfahrzeug 13 zwecks Ein- oder Auslagerung einer Stückguteinheit 2 auf eine bzw. von einer Stützeinrichtung 8 (in "einer Position gem. Fig. 5) millimetergenau zu der betreffenden Stützeinrichtung 8 ausgerichtet ist (welche die Stützschienen 9 - 11 ja nicht nur zum Abstützen von Stückguteinheiten 2 aufweist, sondern auch als Fahrschienen für die Laufrollen 19' des zweiten Laufrollensatzes des Lagerfahrzeuges 13), ist die Förderbahn 4' der Zu- und Abfördereinrichtung 4 an jeder Mündungsstelle einer (rechtwinklig zu ihr verlaufenden) Stützeinrichtung 8 mit einer Arretiereinrichtung 31 versehen, welche nach der Ausrichtung des Lagerfahrzeuges 13 mittels der Einrichtung 25 - 27 eine genaue Feinarretierung des Unterwagens vornimmt.

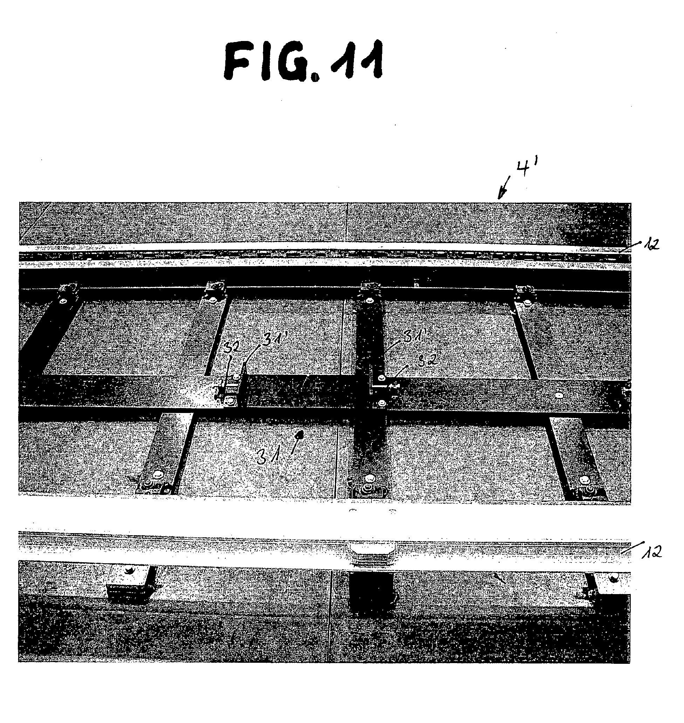

Hierfür stehen bei dem Ausführungsbeispiel gem. Fig. 11 jeweils mittig zwischen den beiden Schienen 12, 12 zwei Flacheisen 31' senkrecht hoch, die bei der Montage mittels Justiereinrichtungen 32 genau justiert worden sind. An der Unterseite des Unterwagens 20 des Lagerfahrzeuges 13 ist eine Rollenanordnung 33 vorgesehen, die von oben her in den Zwischenraum zwischen den beiden Flacheisen 31', 31' einschwenkbar und in Richtung der Förderbahn 4' sodann ausrichtbar ist, wobei die Rollen 33 unter genauer Zentrierung des Lagerfahrzeuges 13 ggf. noch ein geringfügiges Verfahren des Lagerfahrzeuges 13 bewirken, und in ihrer Endstellung an den einander zugekehrten Seiten der Flacheisen 31' anliegen.

Wie bereits weiter oben ausgeführt worden ist, bestehen die Stützeinrichtungen 8 jeweils aus drei Schienen 9, 10 und 11 (s. Fig. 10), die über Vertikalholme 8' und diese verbindende Traversen 8" an dem die Förderebene bildenden Untergrund 7 abgestützt sind, und in der/einer weiteren Lagerebene 18' (s. Fig. 6) i. a. als Regalkonstruktion an den unteren Stützeinrichtungen 8. Wie bspw. Fig. 4 zu entnehmen ist, werden die eingelagerten Stückguteinheiten 2 jeweils im Bereich der Palettenklötze auf den Schienen 9 - 11 abgestützt, und zwar nicht nur an zwei Seitenrändern, sondern auch in der Mitte, weil es anderenfalls insbesondere bei relativ schweren Stückguteinheiten 2 und/oder längerer Lagerzeit zu einem mittigen Durchhängen der Ladeeinheiten 2 kommen kann, was sich nachteilig auf das Stückgut und/oder deren Verpackung und/oder die Palette auswirken kann.

Derartige Drei-Schienen-Stützeinrichtungen 8 erlauben es indes ersichtlich nicht, die einander jeweils gegenüberliegenden Laufrollen 19' des zweiten Laufrollensatzes zwecks Synchronisierung insbesondere der angetriebenen Laufrollen mittels einer Welle zu verbinden, die zwischen dem angetriebenen Rollenpaar 19', 19' längs der Mittellinie 34 (s. Fig. 10) verläuft, da diese ersichtlich mit der Mittelschiene 10 kollidieren würde. Andererseits hat sich eine Synchronisation der beiden angetriebenen Laufrollen 19', 19' des entlang der Stützeinrichtungen 8 verfahrbaren Oberwagens 21 des Lagerfahrzeuges 13 als höchst zweckmäßig erwiesen, so daß hierauf nicht verzichtet worden ist.

Dieses Problem wurde durch einen Winkelgetriebemotor im Oberwagen 21 gelöst, der die eine angetriebene Laufrolle 19' über eine Stummelwelle unmittelbar antreibt, während die andere angetriebene Laufrolle 19' über einen i.w. umgekehrt U-förmigen Zahnriementrieb od.dgl. synchron zu der unmittelbar von diesem Antriebsmotor angetriebenen Laufrolle 19' angetrieben wird, so daß trotz der Mittelschiene 10 ein synchroner Antrieb der angetriebenen Laufrollen 19' gewährleistet ist, und damit eine sichere Geradeausfahrt auf der jeweiligen Stützeinrichtung 8 ohne Verkanten. Dieses ist auch gerade bei der erfindungsgemäßen Ausbildung besonders wichtig, weil auch die Einrichtung 22 zur berührungslosen Energieübertragung eine recht genaue Geradeausfahrt erfordert, da der als Flachschiene ausgebildete Leiter 23 nur mit einem relativ geringen, spaltförmigen Abstand von dem U-förmigen Aufnehmer 24 des Oberwagens umgriffen wird, und die insoweit vorgegebenen Verhältnisse während des Betriebes möglichst genau eingehalten werden müssen.

Die Arbeitsweise der erfindungsgemäßen Lagereinrichtung 1 ergibt sich bereits aus der vorstehenden Beschreibung für den einschlägigen Fachmann im wesentlichen von selbst:

Bei der Lagereinrichtung gemäß den Fig. 5 bis 11 erfolgt die Stückguteinheiten-Übernahme bzw. -Übergabe gemäß dem Doppelpfeil 35 in Fig. 1 zunächst auf einen im rechten Winkel abgewinkelten Abschnitt 4" der Zu- und Abfördereinrichtung 4 (beim Einlagern), und an dessen einem Kopfende über eine Drehscheibe 36 auf die zu den Stützeinrichtungen 8 führende Förderbahn 4', wobei eine Ladeeinheit 2 von den beiden Gabeln 15' der Aufnahmeeinrichtung 15 des Lagerfahrzeuges 13 aufgenommen ist und gehalten wird. Soll eine zugeförderte Ladeeinheit 2 bspw. auf die rechte mittlere Stützeinrichtung 8 (s. Fig. 5) abgesetzt werden, so wird der Oberwagen 21 des Lagerfahrzeuges 13 mittels einer in das Lagerfahrzeug 13 integrierten Dreheinrichtung 37 in die aus den Fig. 5 und 6 ersichtliche Stellung gedreht und bis zu dem am weitesten von der Fahrbahn 4' entfernten freien Lagerplatz 5 dieser Stützeinrichtung 8 verfahren, wie dieses aus Fig. 6 erkennbar ist, und in Fig. 5 lediglich mit einer strichpunktierten Linie angedeutet ist. Die nächste Stückguteinheit 2 würde dann in gleicher Weise eng benachbart zu der vorgenannten Stückguteinheit 2 auf derselben Stützeinrichtung 8 angeordnet u.s.f., wie dieses in Fig. 2 (bzgl. einer etwas anderen Variante) erkennbar ist.

Nach dem Einlagern einer Stückguteinheit 2, bei welcher die Gabeln 15' der Aufnahmeeinrichtung jeweils zwischen deren Schienen nach unten abgesenkt werden, verfährt das Oberteil 21 des Lagerfahrzeuges wieder auf sein Unterteil 20 zurück, das Lagerfahrzeug 13 wird - falls es zwischenzeitlich nicht eine andere Stückguteinheit auslagern soll - in die Übernahmeposition zurückgefahren, und der Einlagerungsvorgang beginnt von vorn.

Es ist noch nachzutragen, daß die Stückguteinheiten 2 jeweils mit einer Codierung 38 versehen sind, die - je nach Bedarf - Daten der Stückgutart, Abmessungen der Ladeeinheit, des Produktionstages, des Einlagerungstages u.dgl. enthält, und daß diese stückguteinheitspezifischen Daten dem Zentralrechner jeweils bei der Einlagerung über die Datenleitung 30 übermittelt werden. Sobald eine Ladeeinheit 2 einen bestimmten Lagerplatz 5 erhalten hat, werden auch die diesbezüglichen durch Abstandsmessung ermittelten Daten dem Zentralrechner zugeleitet und dort abgelegt, so daß jede Stückguteinheit 2 (im Sinne der obigen Definition) definiert einzulagern ist, obwohl die einzelnen Lagerplätze 5 nicht mit einer sie kennzeichnenden Intelligenz versehen sind.

Die Auslagerung erfolgt in entsprechender Weise umgekehrt, ohne daß insoweit also eine detaillierte Beschreibung erforderlich ist.

Zusammenfassend läßt sich feststellen, daß die erfindungsgemäße Lagereinrichtung sich gegenüber konventionellen Lagereinrichtungen vergleichbarer Art durch eine Vielzahl offenkundiger Vorteile auszeichnet, zu denen u.a. und insbesondere die berührungslose Energieversorgung des Lagerfahrzeuges von extern mit ihren diversen Vorteilen gehört, und nicht zuletzt natürlich der vorstehend noch einmal angesprochene ganz erhebliche Vorteil, daß in einem an sich "intelligenzfreien" Lager - mit entsprechend geringem Investitions- und Betriebsaufwand - eine definierte Lagerung von Stückguteinheiten 2 (ggf. auch in mehreren Lagerebenen übereinander) möglich ist.

| **Bezugszeichenliste** | | | |
|---|---|---|---|
| **1** | Lagereinrichtung | | |
| **2** | Stückguteinheiten | | |
| **3** | Palette | | |
| **4** | (Zu- und Ab-)Fördereinrichtung | **4'** | Förderbahn (von 4) |
| **5** | Lagerplatz | **4"** | Abschnitt (von 4) |
| **6** | Gebäude | | |
| **7** | Förderebene (von 4) | | |
| **8** | Stützeinrichtungen | **8'** | Vertikalholme |
| **9** | Stützschiene (von 8) | **8"** | Traversen |
| **10** | Stützschiene (von 8) | | |
| **11** | Stützschiene (von 8) | | |
| **12** | Schienen (von 4) | | |
| **13** | Lagerfahrzeug | | |
| **14** | vertikale Schwenkachse | | |
| **15** | Aufnahmeeinrichtung | **15'** | Gabeln (von 15) |
| **16** | Lastenaufzug | | |
| **17** | Palettierer | | |
| **18, 18'** | Lagerebene | | |
| **19, 19'** | Laufrollensätze | | |
| **20** | Unterwagen (von 13) | | |
| **21** | Oberwagen (von 13) | | |
| **22** | Einrichtung zur berührungslosen Energieübertragung | | |
| **23** | Leiter | | |
| **24** | Aufnehmer | | |
| **25** | Lichtschrankengeber | | |
| **26** | Lichtstahl | | |
| **27** | Reflektor | | |
| **28** | Daten-Übertragungsleitung | | |
| **29** | Meß- und Daten-Schnittstelle | | |
| **30** | Leitung | | |
| **31** | Arritiereinrichtung | **31'** | Flacheisen |
| **32** | Justiereinrichtungen | | |
| **33** | Rollenanordnung | | |
| **34** | Mittelachse | | |
| **35** | Pfeil | | |
| **36** | Drehscheibe | | |
| **37** | Dreheinrichtung | | |
| **38** | Codierung (von 2) | | |

## Patentansprüche

1. Lagereinrichtung (1) zum definierten Ein- und Auslagern von Stückguteinheiten (2), insb. von Ladeeinheiten mit oder ohne Palette (3), mit
- einer mit Stückguteinheiten (2) zu beschickenden Zu- und Abfördereinrichtung (4), mittels welcher einzulagernde Stückguteinheiten (2) einzeln (oder in Gruppen) nacheinander jeweils einem freien Lagerplatz (5) zuzufördern, an diesem abzusetzen, zu gegebener Zeit wieder von dem jeweiligen Lagerplatz (5) aufzunehmen und abzufördern sind; und
- mehreren i.a. rechtwinklig zur Förderbahn (4') der Fördereinrichtung (4) in deren Förderebene (7) (sowie ggf. wenigstens einer zu dieser parallelen weiteren Lagerebene (18')) angeordneten Stützeinrichtungen (8) zum (vorzugsweise eng benachbarten) Einlagern von Stückguteinheiten (2),
wobei die Stützeinrichtungen (8) jeweils wenigstens zwei mit gegenseitigem Abstand zueinander und über der betreffenden Lagerebene (18; 18') angeordnete, parallele Stützschienen (9, 10, 11) aufweisen;
und wobei die Fördereinrichtung (4) eine i.a. gerade (ggf. aber auch in der Förderebene (7) gekrümmte oder abknickende) Förderbahn (4') sowie ein auf dieser verfahrbares, mittels eines elektromotorischen Antriebes antreibbares Lagerfahrzeug (13) aufweist, welches eine höhenverstellbare und i.a. zumindest begrenzt um eine vertikale Schwenkachse (14) verschwenkbare Aufnahmeeinrichtung (15) zum jeweiligen Aufnehmen, Abstützen und Absetzen einer Stückgutcharge (2) aufweist, und welches mittels wenigstens z.T. antreibbarer Laufrollen (19') auf jede(r) Stützeinrichtung (8) verfahrbar ist,
**dadurch gekennzeichnet, daß** das Lagerfahrzeug (13) aus einem mittels eines ersten antreibbaren Laufrollensatzes (19) auf der Förderbahn (4') der Zu- und Abfördereinrichtung (4) verfahrbaren Unterwagen (20) sowie einem mittels eines zweiten antreibbaren Laufrollensatzes (19') relativ zum Unterwagen (20) jeweils auf die Stützschienen (9 - 11) einer Stützeinrichtung (8) verfahrbaren Oberwagen (21) besteht, an dem die Aufnahmeeinrichtung (15) für die jeweils zu handhabende Stückgutcharge (2) angeordnet ist; daß eine Einrichtung (22) zur berührungslosen Übertragung und Versorgung des Lagerfahrzeuges (13) mit der für dessen Betrieb erforderlichen Antriebs- und Steuerungsenergie vorgesehen ist, die einerseits einen mit hochfrequenter elektrischer Energie gespeisten, entlang der Förderbahn (4') der Fördereinrichtung (4) sowie der Stützeinrichtungen (8) verlaufenden, in der Art einer stationären Flachschiene od.dgl. ausgebildeten Leiter (23), und andererseits einen berührungslos mit diesem elektrisch zusammenwirkenden, am Lagerfahrzeug (13) angeordneten, die von dem Leiter (23) abgestrahlte elektrische Energie induktiv aufnehmenden Aufnehmer (24) aufweist, welcher die aufgenommene elektrische Energie an einen ebenfalls im Oberwagen (21) des Lagerfahrzeuges (13) angeordneten Umformer weiterleitet, in/von dem sie in eine/die zum Betrieb der (des) Antriebe(s) des Lagerfahrzeuges (13) sowie der Meß- und Steuerungseinrichtungen (z.B. 25; 25'; 28, 29) erforderliche Energieform umgewandelt und in dieser Form an die jeweiligen Verbraucher weitergeleitet wird; und daß ein externer Zentralrechner vorgesehen ist, dem die beim Einlagern ermittelten Lagerdaten (einschließlich der die entsprechend codierten Stückguteinheiten (2) jeweils individualisierenden Stückgutdaten) zwecks dortiger Ablage zuzuleiten sind.

2. Lagereinrichtung nach Anspruch 1, **dadurch gekennzeichnet, daß** die Einrichtung (22) zur berührungslosen Übertragung hochfrequenter Energie von extern einen am Oberwagen (21) des Lagerfahrzeuges (13) angeordneten, i.w. U-förmigen, ferritischen Gabelabschnitt als Aufnehmer (24) aufweist, welcher den von ihm unter Spaltbildung umfaßten, stegförmigen, stationären Leiter (23) mit geringem Abstand umgreift.

3. Lagereinrichtung nach einem oder beiden der vorhergehenden Ansprüche, **gekennzeichnet durch** eine Entfernungs-Meßeinrichtung (25 - 27) zur Positionsbestimmung des Lagerfahrzeuges (13) auf der Förderbahn (4') der Fördereinrichtung (4) bzw. dessen Oberwagen (21) auf einer Stützeinrichtung (8), mit einem am Oberwagen (21) des Lagerfahrzeuges (13) angeordneten Lichtschrankengeber (25; 25') od.dgl. sowie einem an einem Kopfende der Förderbahn (4') bzw. jeder Stützeinrichtung (8) angeordneten Reflektor (27) od.dgl., sowie **durch** eine Daten-Übertragungseinrichtung (28 - 30), mittels welcher die ermittelten Meßdaten an den Zentralrechner zu übertragen sind.

4. Lagereinrichtung nach einem oder mehreren der vorhergehenden Ansprüche, **dadurch gekennzeichnet, daß** der Oberwagen (21) des Lagerfahrzeuges (13) einen elektrischen Antrieb aufweist, mittels dessen wenigstens der am Oberwagen (21) angeordnete zweite Laufrollensatz (19') antreibbar ist.

5. Lagereinrichtung nach Anspruch 4, **dadurch gekennzeichnet, daß** der erste Laufrollensatz (19) des Unterwagens (20) des Lagerfahrzeuges (13) durch einen im Unterwagen (20) angeordneten, gesonderten elektrischen Antrieb antreibbar ist.

6. Lagereinrichtung nach Anspruch 4, **dadurch gekennzeichnet, daß** bei nur einem Elektroantrieb des Lagerfahrzeuges (13) der Elektroantrieb im Oberwagen (21) angeordnet ist; und daß zwischen dem Oberwagen (21) und dem Unterwagen (20) bzw. zwischen dem Elektroantrieb und dem Laufrollensatz (19) des Unterwagens (20) eine Kupplung vorhanden ist, die dann einkuppelt, wenn der Oberwagen (21) seine Verfahrstellung auf dem Unterwagen (20) eingenommen hat, und auskuppelt, wenn der Oberwagen (21) sich relativ zu dem Unterwagen (20) bewegt (hat).

7. Lagereinrichtung nach einem oder mehren der vorhergehenden Ansprüche, **dadurch gekennzeichnet, daß** die Stützeinrichtungen (8) jeweils in an sich bekannter Weise drei in einer Stützebene verlaufende Stützschienen (9, 10, 11) aufweisen.

8. Lagereinrichtung nach einem oder mehreren der vorhergehenden Ansprüche, **dadurch gekennzeichnet, daß** längs der Zu- und Abfördereinrichtung (4) an jeder Übergabe- bzw. Mündungsstelle zu einer quer zur Förderbahn (4) verlaufenden Stützeinrichtung (8) eine ortsfeste Arretiereinrichtung (31) angeordnet ist, an/mittels welcher das Lagerfahrzeug (13) bei einem Halt an der betreffenden Übergabe- bzw. Mündungsstelle mittels eines am Lagerfahrzeug (13) angeordneten Arretiermittels (33) genau fluchtend zu den Fahrschienen (9 - 11) für die Laufrollen (19') des Oberwagen (21) des Lagerfahrzeuges (13) arretiert zu positionieren ist.

9. Lagereinrichtung nach Anspruch 8, **dadurch gekennzeichnet, daß** die Arretiereinrichtung (31) aus zwei vom Boden der Zu- und Abfördereinrichtung (4) hochstehenden Flacheisen (31') od.dgl. besteht, und daß das Arretiermittel aus einer Rollenanordnung (33) besteht, die unter genauer Positionierung des Lagerfahrzeuges (13) von oben her in die Arretiereinrichtung (31) einzufahren bzw. einzuschwenken ist.
